# EUROPEAN PATENT APPLICATION

(11) **EP 2 538 714 A1**
(43) Date of publication of application: **26.12.2012**
(21) Application number: 11744626.0
(22) Date of filing: 15.02.2011
(51) Int. Cl.: H04W 24/10, H04W 36/08, H04W 72/04, H04W 74/08

(54) **BASE STATION DEVICE AND METHOD FOR MOBILE COMMUNICATIONS SYSTEM**

(30) Priority: 16.02.2010 JP 2010031622
(71) Applicant: NTT DOCOMO, INC., Chiyoda-ku Tokyo 100-6150 (JP)
(72) Inventor: OKUBO, Naoto, Tokyo 100-6150 (JP); ISHII, Hiroyuki, Tokyo 100-6150 (JP); UMESH, Anil, Tokyo 100-6150 (JP); KIYOSHIMA, Kohei, Tokyo 100-6150 (JP)
(74) Representative: HOFFMANN EITLE
(86) International application number: PCT/JP2011/053150
(87) International publication number: WO 2011/102340

(57) **Abstract**

A base station apparatus includes: decoding units for an uplink control signal and an uplink shared data signal; and a reliability determination unit configured to determine a degree of reliability that predetermined information is included in the uplink control signal that is received periodically. In the case where timing of a predetermined period for the predetermined information agrees with reception timing of the uplink shared data signal, (1) whether to perform decoding by assuming that the uplink shared data signal includes the predetermined information is determined according to whether the period is equal to or less than a radio frame length, (2) if the period is longer than the radio frame length, whether to decode the uplink shared data signal by assuming that the uplink shared data signal includes the predetermined information is determined according to whether the degree of reliability is higher than a predetermined value.

## Description

### TECHNICAL FIELD

The present invention disclosed in this application relates to a base station apparatus and a method in a mobile communication system.

### BACKGROUND ART

In such kind of a technical field, mobile communication systems that can be the successors to the so-called "third generation" have been studied by the 3GPP, which is the standards body of the wideband code division multiple access system (W-CDMA). Especially, the successors to the W-CDMA system, the High Speed Downlink Packet Access System (HSDPA), and the High Speed Uplink Packet Access System (HSUPA) include the Long Term Evolution System (LTE), and the IMT-Advanced System, which is the further successor.

In the LTE system and the like, downlink and uplink communications are performed by allocating one or more resource blocks (RB: Resource Block) to a user apparatus (UE: User Equipment). The resource blocks are shared by plural user apparatuses in the system. For the case of the LTE system, a base station apparatus determines, for each subframe that is 1 ms, user apparatuses to which the resource blocks are to be allocated, among the plural user apparatuses. The subframe is also referred to as a "transmission time interval" (TTI: Transmission Time Interval). The process of determining the allocation of the radio resources is called scheduling. For the case of the downlink, the base station apparatus transmits a shared channel to the user apparatuses that have been selected by the scheduling by using one or more resource blocks. This shared channel is called a "physical downlink shared channel" (PDSCH: Physical Downlink Shared CHannel). For the case of the uplink, the user apparatuses that have been selected by the scheduling transmit a shared channel to the base station apparatus by using one or more resource blocks. This shared channel is called a "physical uplink shared channel" (PUSCH: Physical Uplink Shared CHannel).

In a communication system using such shared channels, in principle, it is necessary to perform signaling (reporting) for each subframe so as to report the user apparatuses to which the shared channel is allocated. A control channel used for the signaling is called a "physical downlink control channel" (PDCCH: Physical Downlink Control CHannel) or a downlink L1/L2 control channel (DL-L1/L2 Control Channel).

The downlink control signal includes, in addition to the PDCCH, a physical control format indicator channel (PCFICH: Physical Control Format Indicator Channel), a physical hybrid ARQ indicator channel (PHICH: Physical Hybrid ARQ Indicator Channel), and the like.

The PDCCH may include, for example, the following information:
- Downlink Scheduling Information,
- Uplink Scheduling Grant, and
- Transmission Power Control Command Bit.

The downlink scheduling information includes, for example, information regarding a downlink shared channel. Specifically, the downlink scheduling information may include downlink resource block allocation information, identification information of user apparatuses (UE-ID), the number of streams, information regarding precoding vectors, data sizes, modulation schemes, information regarding a hybrid automatic repeat request (HARQ), and the like.

The uplink scheduling grant includes, for example, information regarding an uplink shared channel. Specifically, the uplink scheduling grant includes uplink resource block allocation information, identification information of a user apparatus (UE-ID), data sizes, modulation schemes, uplink transmission power information, information regarding a demodulation reference signal used in uplink MIMO, and the like.

The PCFICH is information that is utilized to report the format of the PDCCH. More specifically, the PCFICH reports the number of OFDM symbols to which the PDCCH is mapped. In LTE, the number of OFDM symbols to which the PDCCH is mapped is 1, 2, or 3. The PDCCH is mapped from a top OFDM symbol of the subframe in order.

The PHICH includes an acknowledgement signal (ACK/NACK: Acknowledgement/Non-Acknowledgement signal) indicating whether retransmission of the PUSCH, which has been transmitted on the uplink, is required or not.

For the case of the uplink, user data (a normal data signal) and control information accompanying the user data are transmitted by the PUSCH. Besides the PUSCH, a downlink channel quality indicator (CQI: Channel Quality Indicator), a rank indicator (RI), a signal indicating radio resource allocation for the uplink, an acknowledgement signal (ACK/NACK) for the PDSCH, and the like are transmitted by a physical uplink control channel (PUCCH: Physical Uplink Control Channel). The CQI is used for a scheduling process, an adaptive modulation and coding scheme (AMCS: Adaptive Modulation and Coding Scheme) for the physical shared channel in the downlink, and the like. Additionally, in the uplink, a random access channel (RACH) that is utilized during initial connection, a sounding reference signal for measuring receiving quality of the uplink, a demodulation reference signal (DM-RS) for channel compensation and the like for resource blocks assigned to the user apparatuses, and the like are transmitted.

The above-mentioned rank indicator (RI) is described in the following. When the multiple input multiple output (MIMO) scheme is utilized for wireless communications, a transmission diversity scheme and a spatial multiplexing scheme are considered as signal transmission schemes. The transmission diversity scheme attempts to improve reception quality by increasing the spatial diversity gain by transmitting signals of the same information from plural antennas. The spatial multiplexing scheme attempts to increase the data rate by simultaneously transmitting different signals from corresponding antennas. In general, it is preferable that, when a radio propagation condition is not good, the transmission diversity scheme be utilized, and when the radio propagation condition is good, the spatial multiplexing scheme be utilized. To realize this, there is technology called "rank adaptation."

A rank may be defined, for example, to be the number of different data streams transmitted through plural antennas. For example, when the number of antennas is 2, the transmission diversity can be performed by transmitting identical information from the two antennas. In this case, the rank is 1. On the other hand, the spatial multiplexing can be performed by transmitting signals having different information from the corresponding 2 antennas. In this case, the rank is 2. Further, when the number of antennas is 4, the rank can take values of 1, 2, 3, or 4. In general, when the number of antennas is N, the rank can take values of 1, 2, ..., or N.

In general, the rank for the case where the base station apparatus performs downlink data transmission is controlled by the technology called "rank adaptation." The user apparatus determines the optimum rank by measuring reception quality by using a reference signal transmitted on the downlink. The determined rank is reported to the base station apparatus as a rank indicator (RI) by the physical uplink control channel (PUCCH). For the case of the rank adaptation, the user apparatus and the base station adaptively select a rank that is most suitable for the communication condition among the ranks that can be utilized by both sides, and thereby attempt to improve signal quality.

The user apparatus can perform communications while moving between cells by performing handover from a serving cell to an adjacent cell. In the following, an outline of a procedure of handover is described.

The user apparatus measures reception quality of surrounding cells, and transmits a measurement result of a cell of the best reception quality to the base station of the serving cell as a measurement report. A source base station determines whether the user apparatus should perform handover based on the measurement report received from the user apparatus. In the case when the user apparatus should perform handover, the source base station requests the target base station to process handover. In response to the request, the target base station keeps resources (including an individual resource for reporting CQI and the like) for the user apparatus that will access the target base station for handover, and the target base station reports information on the resources to the source base station. The source base station transmits a handover command to the user apparatus. In this case, the information reported from the target base station is also reported to the user apparatus. Then, the user apparatus transmits a random access channel (RACH) preamble message to the target base station. In response to that, the target base station transmits a RACH response message. After that, the user apparatus reports a handover complete signal to the target base station.

Such a procedure in the handover is described in the non-patent document 1 and the non-patent document 2.

### [Prior art documents]

[Non-patent document 1] 3GPP TS36. 300 V8. 11. 0 (2009-12), Section 10. 1. 2. 1
[Non-patent document 2] 3GPP TS36. 331 V8. 8. 0 (2009-12), Section 5. 3. 5. 4
[Non-patent document 3] 3GPP TS36. 213 V8. 8. 0 (2009-09), Section 7. 2

### SUMMARY OF THE INVENTION

### PROBLEM TO BE SOLVED BY THE INVENTION

Thus, after obtaining information of the individual resource for reporting CQI and the like, the user apparatus starts preparation for reporting the CQI and the like. After receiving the RACH response message, if the preparation is completed, the user apparatus reports the CQI and the like. More specifically, the user apparatus may report information, soon after receiving the RACH response message, that can be reported even though a system frame number SFN is unknown. However, the target base station does not know when the user apparatus will be prepared for reporting.

Also, for reporting CQI and the like, as to information that can be reported only if the system frame number is known, the information can be reported only after the system frame number SFN is known. The system frame number SFN is ascertained by receiving broadcast information (the broadcast information in this case is P-BCH) from the target cell after the user apparatus transmits the handover complete signal. Thus, as to the information that cannot be reported unless the system frame number is known, the target base station does not know from when the information will arrive.

In a system such as the Long Term Evolution (LTE) scheme and the like, the CQI and the like is periodically reported by the PUCCH in principle. But, when the PUSCH is assigned, the CQI and the like is reported by using the PUSCH instead of the PUCCH (which is described in the non-patent document 3). In the case when the CQI and the like is reported by the PUCCH, even though the target base station does not know whether the PUCCH actually includes the CQI and the like, the target base station can properly obtain the CQI and the like if it is actually included in the PUCCH (the target base station can decode the CQI and the like). The reason is that the mapping configuration of the PUCCH is the same irrespective whether the CQI and the like is actually mapped.

On the other hand, in the case when the CQI and the like is reported by the PUSCH, the target base station cannot obtain the CQI and the like properly if the target base station does not know whether the CQI and the like is actually included in the PUSCH. The reason is that the mapping configuration of the PUSCH changes according to whether the CQI and the like is actually mapped. In this case, the target base station cannot properly decode a data channel mapped with the CQI and the like in the PUSCH. Thus, transmission and reception of the signal are wasted. In particular, in the case when the PUSCH represents a handover complete signal, the handover is failed, so that mobility control cannot be performed properly.

Accordingly, in the case when there is a mismatch of recognition between the base station apparatus and the user apparatus as to whether predetermined information periodically transmitted by the user apparatus is included in an uplink shared data signal, there is a fear that undesirable situation may occur with respect to communication efficiency and proper mobility control.

An object of the present invention disclosed in the present application is to eliminate the mismatch of recognition between the base station apparatus and the user apparatus as to whether predetermined information periodically transmitted by the user apparatus is included in an uplink shared data signal.

### MEANS FOR SOLVING THE PROBLEM

According to an embodiment of the invention disclosed in the present application, a base station apparatus in a mobile communication system is used, and the base station apparatus includes:
a control signal decoding unit configured to decode an uplink control signal;
a data signal decoding unit configured to decode an uplink shared data signal; and
an reliability determination unit configured to determine a degree of reliability that predetermined information is included in the uplink control signal that is received periodically,
wherein, in the case where timing of a predetermined period of the predetermined information agrees with reception timing of the uplink shared data signal,
if the predetermined period is equal to or less than a radio frame length, the data signal decoding unit decodes the uplink shared data signal by assuming that the uplink shared data signal includes the predetermined information, and
if the predetermined period is longer than the radio frame length,
if the degree of reliability is lower than a predetermined value, the data signal decoding unit decodes the uplink shared data signal by assuming that the uplink shared data signal does not include the predetermined information, and
if the degree of reliability is higher than the predetermined value, the data signal decoding unit decodes the uplink shared data signal by assuming that the uplink shared data signal includes the predetermined information.

### EFFECT OF THE PRESENT INVENTION

According to the disclosed invention, it becomes possible to eliminate the mismatch of recognition between the base station apparatus and the user apparatus as to whether predetermined information periodically transmitted by the user apparatus is included in an uplink shared data signal.

### BRIEF DESCRIPTION OF THE DRAWINGS

Fig. 1 is a diagram showing a handover sequence used in an embodiment;
Fig. 2 is a diagram showing an uplink signal;
Fig. 3 is a table showing a setting example of time direction resources;
Fig. 4 is a diagram showing a concrete example of transmission timing set according to the table of Fig. 3;
Fig. 5 is a diagram showing a situation in which CQI and RI are reported;
Fig. 6 is a diagram showing a situation where control information that is transmitted periodically is not included in PUSCH;
Fig. 7 is a diagram showing a situation where control information that is transmitted periodically is included in PUSCH;
Fig. 8 is a flowchart showing a first operation example of a target base station;
Fig. 9 is a flowchart showing a second operation example of a target base station; and
Fig. 10 is a functional block diagram of a target base station.

### EMBODIMENTS FOR CARRYING OUT THE INVENTION

(1) According to an embodiment of the invention that is disclosed, a base station apparatus includes: decoding units for an uplink control signal and an uplink shared data signal; and a reliability determination unit configured to determine a degree of reliability that predetermined information is included in the uplink control signal that is received periodically. In the case where timing of a predetermined period for the predetermined information agrees with reception timing of the uplink shared data signal, (1) whether to perform decoding by assuming that the uplink shared data signal includes the predetermined information is determined according to whether the period is equal to or less than a radio frame length, (2) if the period is longer than the radio frame length, whether to decode the uplink shared data signal by assuming that the uplink shared data signal includes the predetermined information is determined according to whether the degree of reliability is higher than a predetermined value.
   Since whether to assume that the uplink shared data signal includes the predetermined information for decoding the uplink shared data signal is determined according to the length of the period and the degree of reliability for the predetermined information, the mismatch of recognition between the base station eNB and the user apparatus UE, which is feared in the conventional technique, is less likely to occur.
(2) The base station apparatus may further include: a scheduling unit configured to perform scheduling on a signal for communicating with a user apparatus.
(3) If the degree of reliability is lower than the predetermined value, the scheduling unit may perform the scheduling by imposing a restriction that timing of the predetermined period of the predetermined information should not agree with reception timing of the uplink shared data signal. This feature can efficiently solve the problem in that determination of the degree of reliability is not properly performed so that the degree of reliability remains low even though the user apparatus has reported the predetermined information.
(4) If the degree of reliability is higher than the predetermined value, the scheduling unit may perform the scheduling by releasing the restriction. This is preferable from the viewpoint that flexibility of scheduling is ensured by releasing unnecessary restriction.
(5) The base station apparatus may further includes: a transmission unit configured to transmit a random access channel (RACH) response message in response to reception of a random access channel (RACH) preamble message from the user apparatus, and the scheduling unit may establishe transmission timing of the RACH response message such that the timing of the predetermined period for the predetermined information does not agree with reception timing of a handover complete signal sent from the user apparatus in response to the RACH response message. Accordingly, it is ensured that the predetermined information is not included in the handover complete signal, so that the fear of failure of handover can be decreased.
(6) If the uplink shared data signal is a handover complete signal and the predetermined period is longer than the radio frame length, the data signal decoding unit may decode the uplink shared data signal by assuming that the uplink shared data signal does not include the predetermined information.
(7) The reliability determination unit may determine the degree of reliability by measuring reception quality of the predetermined information.
(8) The reliability determination unit may determine the degree of reliability based on an instantaneous reception quality of the predetermined information, or may determined the degree of reliability based on whether the reception quality of the predetermined information exceeds a threshold continuously a plurality of times by providing protection stages.
(9) The predetermined information may represent an indicator representing a downlink channel state, a rank indicator of a user apparatus, a precoding matrix indicator or a sounding reference signal.
(10) According to another aspect of the invention that is disclosed, a method in a base station apparatus of a mobile communication system is used, the method including the steps of:
   receiving an uplink control signal periodically, decoding the uplink control signal, and determining a degree of reliability that predetermined information is included in the uplink control signal; and
   receiving an uplink shared data signal and decoding the uplink shared data signal,
   wherein, in the case where timing of a predetermined period for the predetermined information agrees with reception timing of the uplink shared data signal,
   if the predetermined period is equal to or less than a radio frame length, the base station apparatus decodes the uplink shared data signal by assuming that the uplink shared data signal includes the predetermined information, and
   if the predetermined period is longer than the radio frame length,
   if the degree of reliability is lower than a predetermined value, the base station apparatus decodes the uplink shared data signal by assuming that the uplink shared data signal does not include the predetermined information, and
   if the degree of reliability is higher than the predetermined value, the base station apparatus decodes the uplink shared data signal by assuming that the uplink shared data signal includes the predetermined information.

An embodiment is described from the viewpoint of the following aspects.
1. Handover sequence
2. First operation example
3. Second operation example
4. Third operation example
5. Base station apparatus

### [First embodiment]

### <1. Handover sequence>

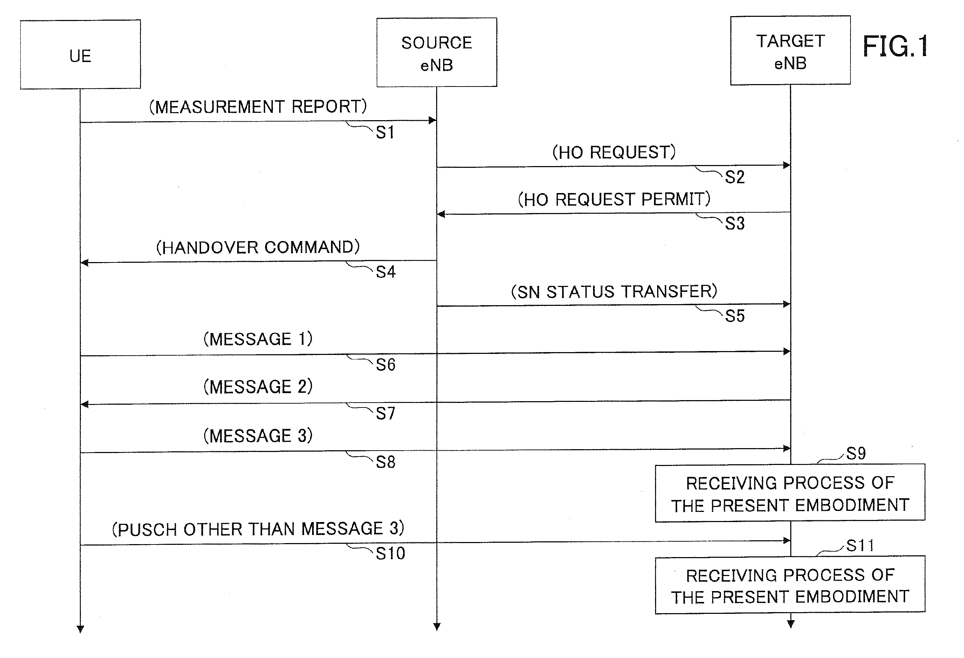

Fig. 1 shows a sequence on handover performed in an embodiment. The user apparatus UE measures reception quality of surrounding cells.

In the present embodiment, an example is described in which handover between different eNBs is performed. But, the present invention can be also applied to handover between sectors in the same eNB and handover within the same cell.

In step S1, the user apparatus UE reports a measurement result indicating a cell of the best reception quality to the base station eNB. The base station eNB is a base station eNB of a serving cell which is referred to as a source base station or a move-source base station. The measurement result is reported from the user apparatus UE to the source base station eNB as a measurement report.

The source base station eNB that receives the measurement report from the user apparatus UE determines whether the user apparatus should perform handover to an adjacent cell. In the case when the user apparatus should perform handover, the source base station eNB transmits a handover request signal (HO) to the target base station eNB in step S2. The target base station eNB is a base station of a cell of the move destination in the handover, and may be referred to as a move-destination base station.

The target base station eNB that receives the handover request signal reserves resources for handover. The resources in this case include information of an individual resource to be used by the user apparatus after handover. More specifically, the information of the individual resource indicates a resource (CQI,SR) of a physical uplink control channel (PUCCH) and a resource of a sounding reference signal (SRS) and the like that the user apparatus UE can use in the cell under the target base station eNB.

In the following, the PUCCH is described as an example of individual resource information.

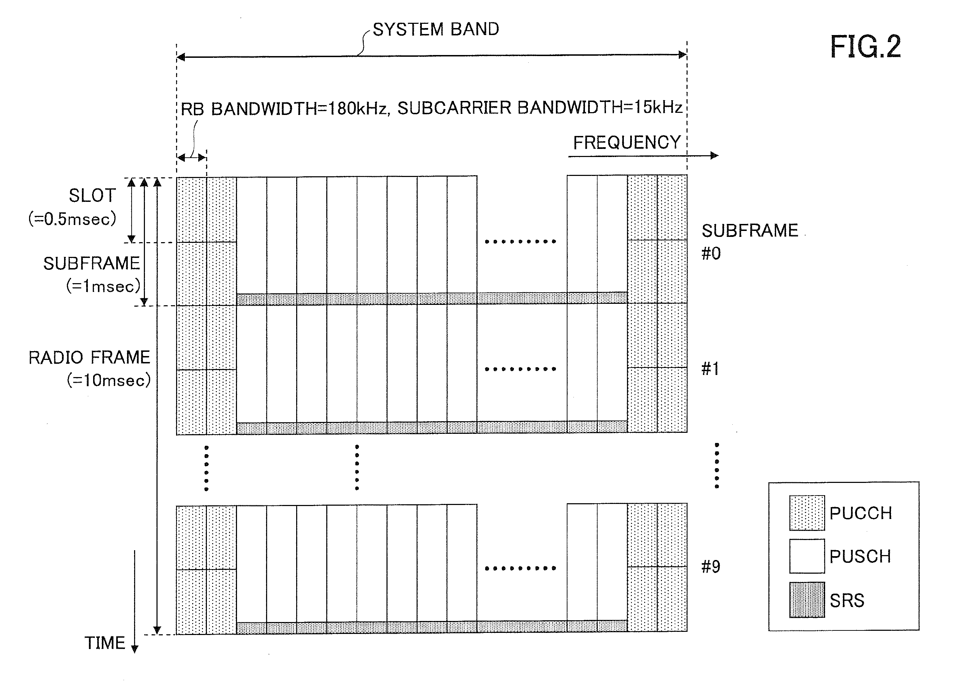

Fig. 2 shows an uplink signal. A radio frame of 10 ms includes 10 subframes each subframe being 1 ms. One subframe includes two slots each of which slot is 0.5 ms. A bandwidth of the system band may be 5 MHz or 20 MHz or the like, and also other values may be adopted. The system bandwidth includes many resource blocks (RB). In the example shown in the figure, one resource block occupies 180 kHz. Two resource blocks in each side of the system band are used as PUCCH, and the other parts of the frequency band are used as PUSCH. Thus, in the example of the figure, four resource blocks RB are used as the PUCCH in total. However, this is not essential for the present invention, and the number of the resource blocks used for the PUCCH may be another number. Also, in the example of the figure, the sounding reference signal SRS is included at the end of the subframe. But, the sounding reference signal SRS is not necessarily transmitted every subframe. It may be transmitted at a longer cycle.

The PUCCH is assigned to the user apparatus UE beforehand as an individual resource. In terms of this point, the PUCCH is different from the physical uplink shared data channel PUSCH that is assigned as necessary by scheduling. For example, the PUCCH is assigned when the power is turned on or when handover is performed. In general, the PUCCH is used for reporting predetermined control information to the base station apparatus eNB. The predetermined control information is, for example, information indicating radio state of the downlink (CQI), a rank indicator (RI), acknowledgement information (ACK/NACK) for PDSCH, a precoding matrix indicator (PMI) and the like. In these pieces of information, at least CQI, RI and PMI need to be periodically reported, and are reported at unperiodical timing as necessary. The resource used for periodic reporting is specified by a resource in a time direction (transmission period and transmission timing of the user apparatus UE), a resource in a frequency direction (resource block RB), and a resource in a code direction (cyclic shift amount of CAZAC code sequence). The resource in the time direction is specified by a parameter I_{CQI/PMI} = cqi - pmi - ConfigIndex, for example. A resource in a frequency direction is specified by a parameter cqi - PUCCH - ResourceIndex, for example.

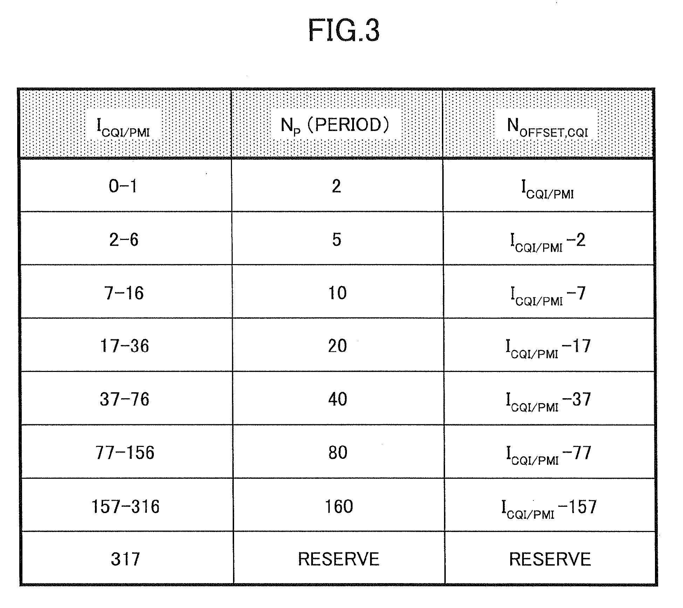

Fig. 3 shows the resource in the time direction represented by I_{CQI/PMI}. The resource in the time direction is represented by a period Np represented as the number of subframes, and the number of offsets N_{OFFSET,CQI} represented as the number of subframes.

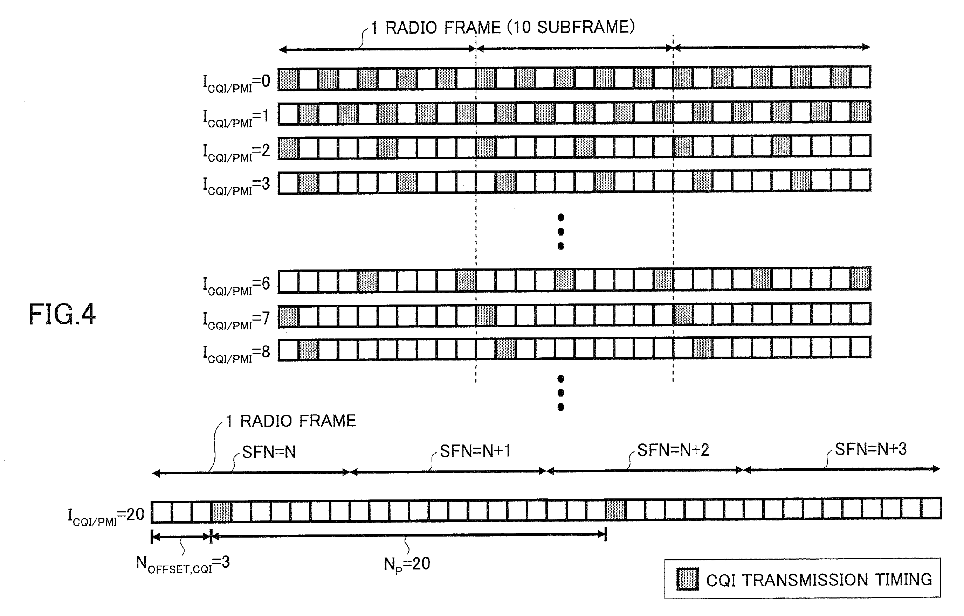

Fig. 4 shows concrete transmission timing for I_{CQI/PMI} = 0-3, 6-8 and 20 in the time direction resources shown in Fig. 3. Various report timings can be realized by adding the offset N_{OFFSET,CQI} to the individual transmission period Np.

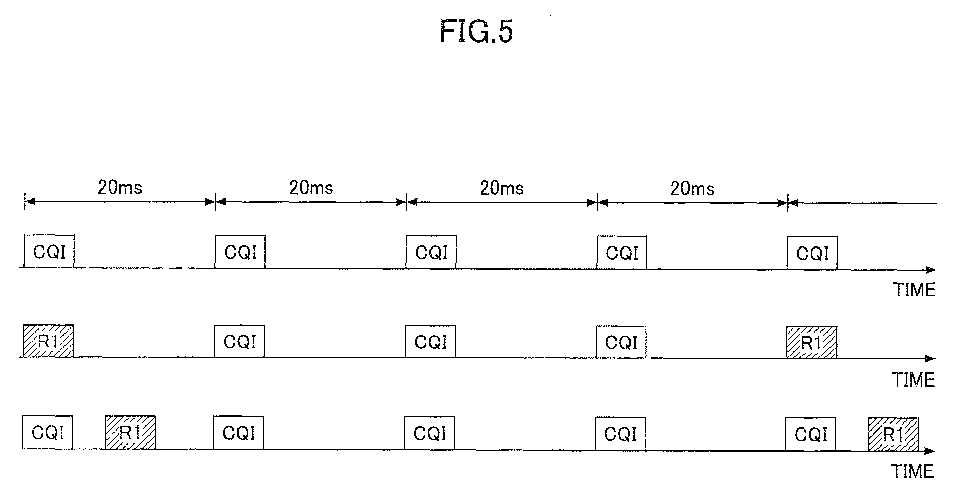

Fig. 5 schematically shows three examples in which CQI and RI are reported to the base station. In the first example, only CQI is reported every 20 ms. In the second example, CQI is reported every 20 ms in principle, but, RI instead of CQI is reported every 80 ms. In the third example, CQI is reported every 20 ms, and RI is reported every 80 ms, and they are not reported at the same timing. RI may be reported using a part of the transmission timing on CQI like the second example, or CQI and RI may be reported independently like the third example.

The target eNB that receives the handover request, in step S2 of Fig. 1, keeps a resource for PUCCH for the user apparatus to perform handover. When the resource is not kept, the handover is rejected. For example, when the target cell is congested, handover is rejected. In this example, it is assumed that handover is permitted. In this case, the target base station eNB transmits a handover request permit signal (handover request acknowledgement) to the source base station eNB with information for specifying the resource of the PUCCH in step S3. As mentioned above, the resource of the PUCCH is specified by I_{CQI/PMI} and the like. The handover request permit signal not only includes the resource of the PUCCH but also includes radio network temporary ID (C-RNTI) of the cell, RACH preamble that is selectively specified, and a part of broadcast information in the target cell, and the like. These pieces information are used when performing handover.

The source base station eNB transmits a handover command (RRC Connection Reconfiguration) to the user apparatus UE in step S4 in response to the handover request permit signal from the target base station eNB. The handover command is a RRC message for executing handover. In response to this command, the user apparatus UE starts to perform handover. The handover command not only includes the information of the resource (I_{CQI/PMI} and the like) kept by the target base station eNB but also includes radio network temporary ID (C-RNTI) of the cell, RACH preamble that is selectively specified, and a part of broadcast information and the like.

In step S5, the source base station eNB reports status information of the user apparatus UE that performs handover to the target base station eNB. In general, the status information indicates the last PDCP sequence numbers of uplink and downlink on radio access bearer of the user apparatus.

In step S6, the user apparatus UE transmits a random access channel (RACH) preamble message (message 1) specified by the handover command to the target base station eNB, so as to be synchronized with the target base station eNB (Synchronization). In response to that, in step S7, the target base station eNB reports, to the user apparatus UE, assignment information (UL-Grant) of the physical uplink shared data channel PUSCH and timing advance (UL allocation + TA) (message 2) by the RACH response message. Then, in step S8, the user apparatus UE transmits a message (message 3) indicating that handover succeeds to the target base station eNB by the assigned PUSCH (RRC Connection Reconfiguration Complete).

As mentioned above, in step S4, the user apparatus UE receives information of the individual resource for reporting CQI, PMI, RI and ACK/NACK and the like (to be referred to as CQI and the like hereinafter). Then, after step S7, the user apparatus UE is synchronized with the target base station eNB. Therefore, if the user apparatus UE is prepared to report the CQI and the like, the user apparatus UE may report the CQI and the like at the timing determined by the specified period Np and the offset N_{OFFSET,CQI}. In the case when the timing of the report of the CQI and the like agrees with the transmission timing of the message 3 of step S8, the CQI and the like is reported with the message 3. In the present application, "timing agrees with ..." means that at least subframes agree with each other. As mentioned above, the target base station eNB cannot exactly know a time from when the user apparatus UE is prepared to report the CQI and the like beforehand. Thus, there is a fear that mismatch of recognition between the base station apparatus eNB and the user apparatus UE occurs as to whether CQI and the like is included in the PUSCH.

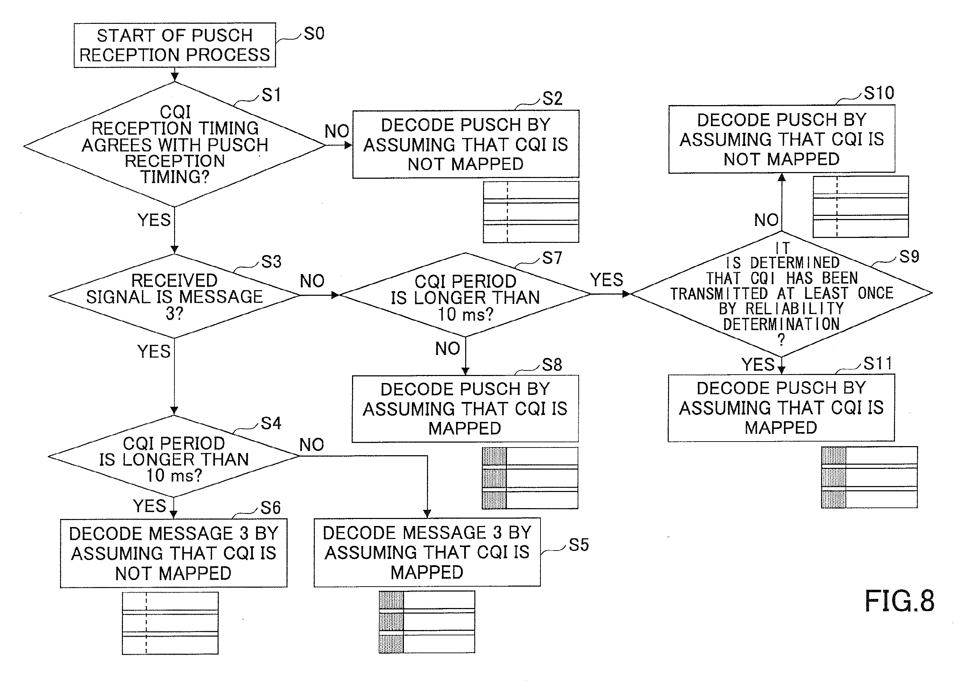

In step S9, reception processing of the present embodiment is performed. Details of operation in steps S9 and S11 will be further described with reference to Fig. 8 and the like.

In the case when the reception timing of the message 3 of step S8 agrees with the reception timing of the CQI and the like that the user apparatus UE periodically transmits, following processes (1) and (2) are performed in step S9. In general, the target base station eNB performs decoding by determining whether to assume that the message 3 includes CQI and the like according to whether the period of reception of the CQI and the like is longer than the radio frame length. If the reception timing of the message 3 does not agree with the reception timing of the CQI and the like, the target base station eNB performs conventional processes instead of the following processes. That is, the target base station eNB performs decoding by assuming that the message 3 does not include the CQI and the like.
(1) In the case when the transmission period of the CQI and the like is equal to or less than the radio frame length, the target base station eNB performs decoding by assuming that the message 3 includes the CQI and the like. In this example, the radio frame length is 10 subframes (10 ms). Thus, this case corresponds to the case in which the period Np shown in Fig. 3 is equal to or less than 10, that is, this case corresponds to the case of I_{CQI/PMI}=0-16. In this case, which subframe in one radio frame corresponds to the transmission timing of the CQI and the like is common to every radio frame. For example, in the case of I_{CQI/PMI}=6, as shown in Figs. 3 and 4, the offset is N_{OFFSET,CQI}=4 and the period is Np=5, and a subframe right after four offsets (fifth subframe) and fifth subframe from the subframe (tenth subframe) are the transmission timing of the CQI and the like. In the next subframe, also the fifth and tenth subframes are the transmission timing of the CQI and the like. Accordingly, in the case when the transmission period of the CQI and the like is equal to or less than the radio frame length, the user apparatus UE can uniquely specify the transmission timing of the CQI and the like and can report the CQI and the like since the user apparatus UE ascertains each boundary between radio frames, even though the user apparatus UE does not obtain the system frame number. Thus, in the present embodiment, if the transmission period of the CQI and the like is equal to or less than the radio frame length, the target base station eNB performs decoding by assuming that the message 3 includes the CQI and the like.

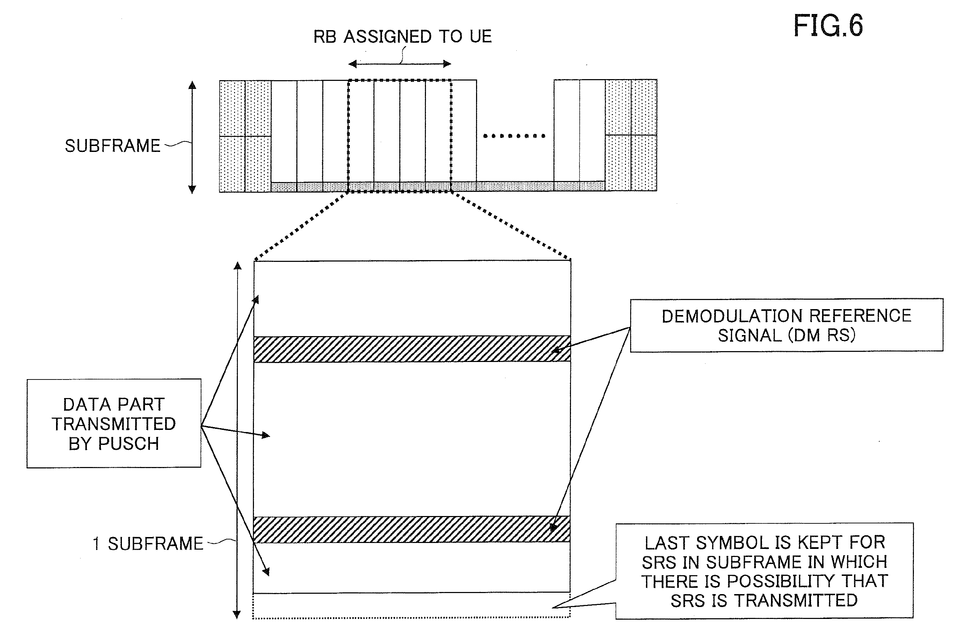

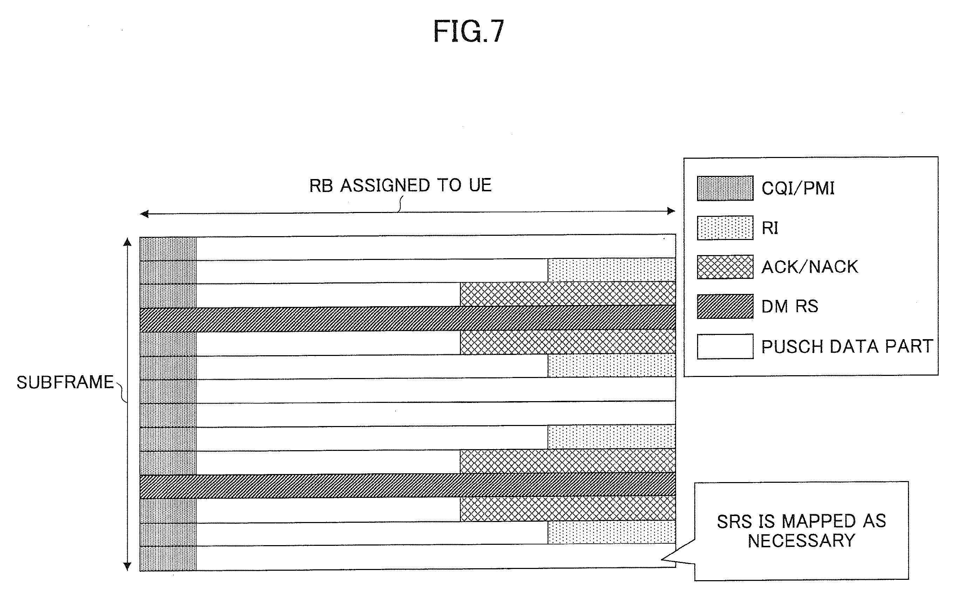

   Fig. 6 shows a situation where a user is assigned four resource blocks RB in the uplink. In the case of the figure, information of the CQI and the like is not included. Fig. 6 also shows a demodulation reference signal (DMRS). Also, the last symbol includes a sounding reference signal SRS as necessary. On the other hand, Fig. 7 shows a situation in which a resource block RB assigned to the user apparatus UE includes information of the CQI and the like. The mapping pattern shown in Fig. 7 occurs when the periodic transmission timing of the CQI and the like agrees with the transmission timing of PUSCH.
   To perform decoding by assuming that the message 3 includes the CQI and the like means that the target base station eNB extracts data from PUSCH and decodes the date by assuming the mapping of information shown in Fig. 7 irrespective of whether the CQI and the like is actually included in the message 3. Although Fig. 7 includes not only CQI but also PMI, RI and ACK/NACK (and also SRS in some cases), it is not necessarily that all of them are reported by the same subframe. It is assumed that PUSCH (message 3 in this case) includes a piece of information (only CQI, for example) of which the transmission period agrees with the timing of PUSCH. In other words, by avoiding pieces of information such as CQI and DMRS, information mapped to the other parts is extracted so that data part of PUSCH is extracted.
(2) In the case when the transmission period of the CQI and the like is longer than the radio frame length, the target base station eNB performs decoding by assuming that the message 3 does not include the CQI and the like. This is opposite to the case of (1). This case is described by using an example of I_{CQI/PMI}=20. In this case, as shown in Figs. 3 and 4, the transmission period Np is 20 that is longer than the radio frame length, and the offset N_{OFFSET,CQI} is 3. Fig. 4 shows four radio frames. It is assumed that the radio frames are associated with system frame numbers N, N+1, N+2 and N+3 respectively. As to a frame of the system frame number SFN=N, the fourth subframe is the transmission timing of the CQI and the like. In the next system frame number SFN=N+1, the CQI and the like is not reported, and, in the fourth subframe of the further next system frame number SFN=N+2, CQI and the like is transmitted. Therefore, the subframe corresponding to the transmission timing is not common to every radio frame. It is necessary to ascertain the system frame number SFN in order to specify the transmission timing. At the stage in which the user apparatus UE transmits the message 3 in step S8 of Fig. 1, it is estimated that the user apparatus UE has not yet obtained SFN. The reason is that, only after obtaining the broadcast information (P-BCH) from the target base station eNB after step S8, SFN is ascertained. Therefore, the target base station eNB performs decoding by assuming that the message 3 does not include CQI and the like.
   To perform decoding by assuming that the message 3 does not include CQI and the like means that the target base station eNB extracts data of PUSCH and decodes the data by assuming the mapping of information shown in Fig. 6 irrespective of whether the message 3 actually includes the CQI and the like.
   In step S10 of Fig. 1, the user apparatus UE transmits PUSCH other than the message 3 to the target base station eNB. In the case when the reception timing of PUSCH agrees with the reception timing of CQI and the like reported to the user apparatus UE in steps S3 and S4, following processes (3) and (4) are performed in step S11. When they do not agree with each other, the target base station eNB performs conventional processes instead of the following processes. That is, the target base station eNB performs decoding by assuming that the message 3 does not include CQI and the like.
(3) In the case when the transmission period of the CQI and the like is equal to or less than the radio frame length, the target base station eNB performs decoding by assuming that the PUSCH includes the CQI and the like.
(4) In the case when the transmission period of the CQI and the like is longer than the radio frame length, the target base station eNB performs decoding by determining whether to assume that PUSCH includes the CQI and the like according to whether a degree of reliability is high. In this embodiment, in step S3 of Fig. 1, the target base station eNB determines a degree of reliability (certainty) that PUCCH periodically transmitted from the user apparatus UE includes CQI and the like after permitting handover. How the CQI and the like is mapped in the PUCCH is known to the target base station eNB. The target base station eNB extracts information from a part corresponding to CQI and the like in the received PUCCH, and determines whether the extracted information represents significant information. The determination may be performed by measuring reception quality or reception level for the information. If the PUCCH actually includes the information of the CQI and the like, the reception quality becomes a good value. If the PUCCH does not actually include the information of the CQI and the like, that is, no information is transmitted, the reception quality becomes a bad value. The reception quality or the reception level may be represented as reception power, electric field strength RSSI, desired wave received power RSCP, SIR, SINR, Ec/No and the like. Also, the degree of reliability may be determined based on an instantaneous result of the reception quality, or the degree of reliability may be determined based on whether the reception quality exceeds a threshold continuously a plurality of times by providing protection stages.

As mentioned above, in the case when the transmission period of the CQI and the like is longer than the radio frame length, it is necessary to ascertain the system frame number in order to report the CQI and the like. The system frame number is unknown right after handover, and is ascertained after that. Therefore, the degree of reliability that the PUCCH periodically transmitted by the user apparatus UE includes the CQI and the like becomes a low value right after handover. And, it is predicted that the value becomes high after the system frame number is obtained. Thus, in the present embodiment, when the degree of reliability is low, the source base station eNB performs decoding by assuming that the PUSCH does not include the CQI and the like. Then, after the reliability becomes high, the source base station eNB performs decoding by assuming that the PUSCH includes CQI and the like.

### <2. First operation example>

Fig. 8 shows a first operation example in the target base station eNB. In general, steps S0 - S6 of Fig. 8 correspond to steps S8 - S9 of Fig. 1, and steps S7 - S11 of Fig. 8 correspond to steps S10 - S11 of Fig. 1.

In step S0, the target base station eNB receives PUSCH, which corresponds to step S8 of Fig. 1.

In step S1, it is determined whether the reception timing of the PUSCH agrees with reception timing of CQI and the like that is periodically received. When they agree, the flow goes to step S3. If they do not agree, the flow goes to step S2.

In the case when the flow goes to step S2, the PUSCH does not include the CQI and the like that is transmitted periodically. In this operation example, a case that the base station eNB instructs the user apparatus UE to report CQI, other than the periodical report of the CQI and the like, is excluded. In step S2, the PUSCH is decoded by assuming that it does not include CQI.

In step S3, it is determined whether the received PUSCH is the message 3, that is, whether the received PUSCH is the handover complete signal (RRC Connection Reconfiguration Complete). If the PUSCH is the message 3, the flow goes to step S4. If not, the flow goes to step S7.

In step S4, it is determined whether the period of report of the CQI and the like is longer than the radio frame length. As an example, the radio frame length is 10 ms. If the period of report of the CQI and the like is not longer (is shorter) than the radio frame length, the flow goes to step S5. If the period of report of the CQI and the like is longer than the radio frame length, the flow goes to step S6.

In the case when the period of report of the CQI and the like is equal to or less than the radio frame length, the user apparatus UE can accurately specify transmission timing of the CQI and the like and transmit it even though the user apparatus UE has not obtained the system frame number. Therefore, the source base station eNB performs decoding by assuming that the received message 3 includes the CQI and the like in step S5.

In step S6, on the other hand, the source base station eNB performs decoding by assuming that the received message 3 does not include the CQI and the like. The reason is that, in the stage where the user apparatus UE transmits the message 3, it is rare that the user apparatus UE has already obtained the system frame number SFN.

In step S7, like step S4, it is determined whether the period of report of the CQI and the like is longer than the radio frame length. If the period of report of the CQI and the like is not longer (is shorter) than the radio frame length, the flow goes to step S8. If the period of report of the CQI and the like is longer than the radio frame length, the flow goes to step S9.

In the case when the flow goes to step S8, like the step S5, the user apparatus UE can accurately specify transmission timing of the CQI and the like and transmit it even though the user apparatus UE has not obtained the system frame number. Therefore, the source base station eNB performs decoding by assuming that the received message 3 includes the CQI and the like in step S5.

In step S9, it is determined whether the degree of reliability is high. As mentioned before, in the process in which the PUCCH is reported a plurality of times, the degree of reliability is a low value first, then, after that, the degree of reliability becomes a high value. If the degree of reliability is low, the flow goes to step S10. If the degree of reliability is not low, the flow goes to step S11.

In step S10, the source base station eNB performs decoding by assuming that the received PUSCH does not include the CQI and the like.

In step S11, on the other hand, the source base station eNB performs decoding by assuming that the received PUSCH includes the CQI and the like.

Accordingly, the target base station eNB determines whether to decode PUSCH by assuming that PUSCH includes CQI and the like according to the length of the period of the report of the CQI and the like and according to the degree of reliability. In response to the operation of the base station eNB, the user apparatus UE maps CQI and the like to the PUSCH. For example, in the case when the transmission period of the CQI and the like is shorter than the radio frame length, the user apparatus UE performs mapping of the data part of PUSCH by avoiding the resource for the CQI and the like as shown in Fig. 7 even though the user apparatus UE is not yet prepared for reporting the CQI and the like. In the case when the transmission period of the CQI and the like is longer than the radio frame length, the user apparatus UE uses mapping of PUSCH shown in Fig. 6 if the user apparatus UE has not transmitted the periodic PUCCH to the source base station eNB. If the user apparatus UE has transmitted the periodic PUCCH to the source base station eNB, the user apparatus UE uses mapping of PUSCH shown in Fig. 7.

According to the first operation example, the target base station eNB determines whether to assume that PUSCH includes the CQI and the like in decoding PUSCH according to individual situations. Accordingly, the mismatch of recognition between the base station apparatus eNB and the user apparatus UE is less likely to occur, as to whether the CQI and the like periodically transmitted by the user apparatus UE is included in PUSCH.

### <3. Second operation example>

In the case of the first operation example, in steps S9-S11, the degree of reliability (certainty) that the PUCCH includes the CQI and the like is determined based on an assumption that the degree of reliability is low at the early stage of handover, then, the degree of reliability becomes higher after that. On the other hand, in the case when the periodic timing of the CQI and the like agrees with the timing of PUSCH, the CQI and the like is transmitted by the PUSCH instead of PUCCH. Thus, in handover, in the case when the periodic timing of the CQI and the like agrees with the timing of PUSCH, there is a problem in that the degree of reliability remains low even though the user apparatus UE has reported the CQI and the like to the target base station eNB, which does not conform to the actual situation. In the second operation example, such a problem is addressed by devising a method of scheduling in the first operation example.

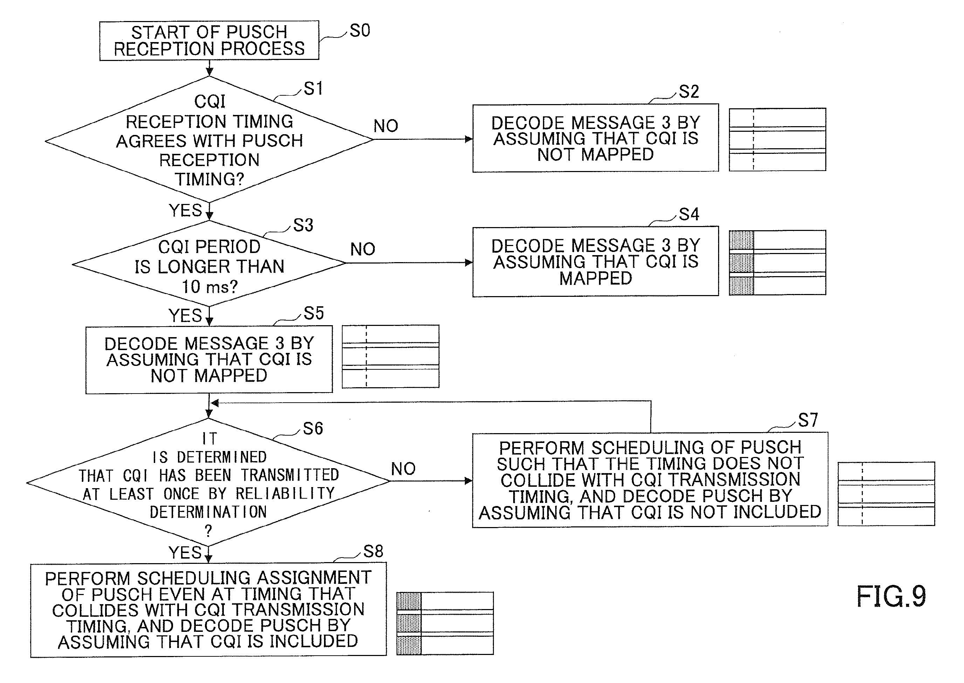

Fig. 9 shows the second operation example in the target base station eNB. In general, steps S0-S5 of Fig. 9 correspond to steps S8 and S9 of Fig. 1, and also correspond to steps S0-S6 of Fig. 8. Steps S6-S7 of Fig. 9 correspond to steps S10 and S11 of Fig. 1, and also correspond to steps S9-S11 of Fig. 8.

In step S0, the target base station eNB receives the PUSCH representing the message 3, which corresponds to step S8 of Fig. 1. The message 3 corresponds to a handover complete signal representing "RRC Connection Reconfiguration Complete."

In step S1, it is determined whether the reception timing of the message 3 agrees with the reception timing of the CQI and the like that is received periodically. If they agree, the flow goes to step S3. If not, the flow goes to step S2.

In the case when the flow goes to step S2, the PUSCH that represents the message 3 does not include the CQI and the like transmitted periodically. Thus, in step S2, the PUSCH is decoded in which it is assumed that CQI is not included.

In step S3, it is determined whether the period of report of the CQI and the like is longer than the radio frame length. As an example, the radio frame length is 10 ms. If the period of report of the CQI and the like is not longer (is shorter) than the radio frame length, the flow goes to step S4. If the period of report of the CQI and the like is longer than the radio frame length, the flow goes to step S5.

The case in which the flow goes to step S4 corresponds to the case in which the period of report of the CQI and the like is shorter than the radio frame length. In this case, the user apparatus UE can accurately specify the transmission timing of the CQI and the like and transmit it even though the system frame number is not obtained. Thus, in step S4, the source base station eNB performs decoding by assuming that the received message 3 includes the CQI and the like.

On the other hand, in step S5, the source base station eNB performs decoding by assuming that the received message 3 does not include the CQI and the like. The reason is that, in the stage where the user apparatus UE transmits the message 3, it is rare that the user apparatus UE has already obtained the system frame number.

In step S6, like the step S9 of Fig. 8, it is determined whether the degree of reliability that the PUCCH includes the CQI and the like is high and is equal to or greater than a threshold. If the degree of reliability is lower than the threshold, the flow goes to step S7. If the degree the reliability is high, the flow goes to step S8.

In step S7, the scheduler of the source base station eNB determines a resource of PUSCH (especially, a resource in the time direction) by imposing a restriction that the periodic reception timing of the CQI and the like should not agree with the reception timing of the PUSCH. Accordingly, when the degree of reliability is low, it is ensured that the CQI and the like is reported by the PUCCH. Then, as to decoding processes, similarly to the case of the first operation example (step S10 of Fig. 8), the source base station eNB performs decoding by assuming that the received PUSCH does not include the CQI and the like.

In step S8, scheduling of PUSCH is performed by releasing the above-mentioned restriction. Thus, according to circumstances, the CQI and the like is reported to the base station eNB by PUSCH instead of PUCCH. In the case where the flow goes to step S8, since the degree of reliability is high, there is a track record that the user apparatus UE has reported the CQI and the like. Thus, the source base station eNB performs decoding by assuming that the received PUSCH includes the CQI and the like.

As mentioned above, according to the second operation example, it is determined whether a restriction is imposed on scheduling according to whether the degree of reliability that the PUCCH includes the CQI and the like is high. The restriction is that the timing of the periodic CQI and the like should not agree with the timing of the PUSCH. Accordingly, the problem can be effectively solved, in which the problem is that the degree of reliability remains low even though the CQI and the like has been reported by the PUSCH when the reliability was low and there is a track record of report of the CQI and the like. Accordingly, as to whether the PUSCH includes the CQI and the like, the mismatch of recognition between the source base station eNB and the user apparatus UE is further less likely to occur.

### <4. Third operation example>

The concept of the second operation example to devise scheduling of the first operation example can be also applied to the message 2 that invokes transmission of the message 3. As explained for steps S6-S8 of Fig. 1, messages 1-3 are transmitted in the handover sequence. First, the message 1 (RACH preamble) is transmitted from the user apparatus UE to the target base station eNB. In response to that, the message 2 (RACH response) is transmitted from the source base station eNB to the user apparatus UE. In response, the message 3 (handover complete) is transmitted from the user apparatus UE to the source base station eNB. By adjusting the transmission timing of the message 2, the source base station eNB can adjust the reception timing of the message 3.

Thus, in the third operation example, the source base station eNB transmits the message 2 to the user apparatus UE such that the periodic reception timing of the CQI and the like does not agree with the reception timing of the message 3. Accordingly, it is ensured that at least a newly transmitted message 3 does not include the periodic CQI and the like, and the source base station eNB can decode the message 3 by relying on it.

However, even when the timing of the message 2 is adjusted as mentioned above, there may be a case in which retransmission of the message 3 and report of the periodical CQI and the like occur at the same timing. Thus, as to a message 3 that is retransmitted, it is determined whether to assume that the CQI and the like is included in the message 3 according to whether the period of report of the CQI and the like is longer than the radio frame length. More specifically, when the period of the CQI and the like is equal to or less than the radio frame length, the source base station eNB performs decoding by assuming that the retransmitted message 3 includes the CQI and the like. On the other hand, if the period of the CQI and the like is longer than the radio frame length, the source base station eNB performs decoding by assuming that the retransmitted message 3 does not include the CQI and the like.

According to the third operation example, as to whether the PUSCH includes the CQI and the like, the mismatch of recognition between the source base station eNB and the user apparatus UE is further less likely to occur.

### <4. Base station apparatus>

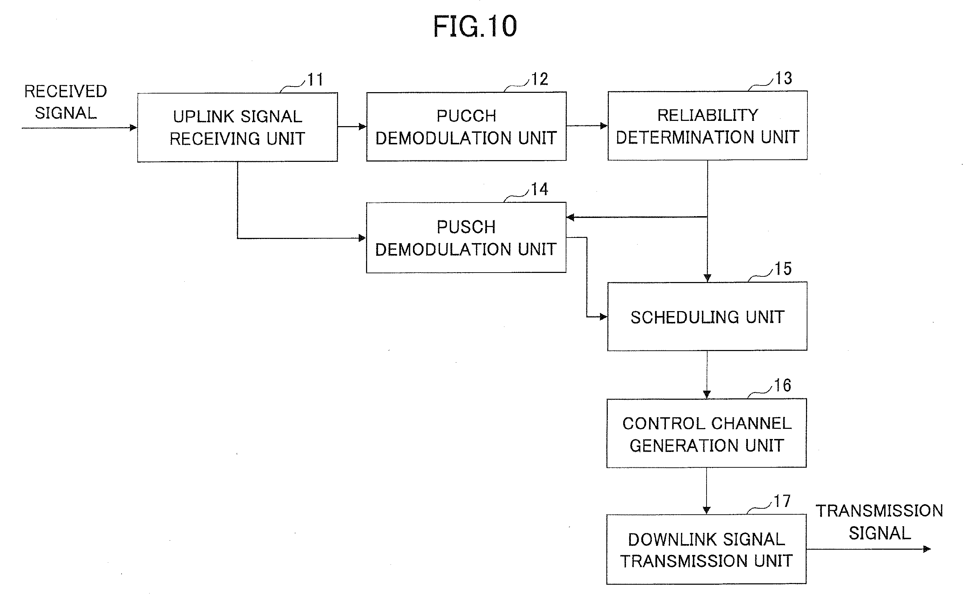

Fig. 10 shows a functional block diagram of a base station. Typically, the base station is the source base station eNB. In various functional elements included in the base station, Fig. 10 shows an uplink signal receiving unit 11, a PUCCH demodulation unit 12, a reliability determination unit 13, a PUSCH demodulation unit 14, a scheduling unit 15, a control channel generation unit 16, and a downlink signal transmission unit 17.

The uplink signal receiving unit 11 receives various signal transmitted by the user apparatus using the uplink. In the present application, PUCCH and PUSCH are especially important.

The PUCCH demodulation unit 12 demodulates and decodes the PUCCH received from the user apparatus. The PUCCH includes predetermined information reported to the base station eNB by the user apparatus UE. The predetermined information is CQI, RI, ACK/NACK and the like, for example.

The reliability determination unit 13 determines a degree of reliability that the received PUCCH includes the information such as the CQI. For example, the degree of reliability may be determined by extracting information from a part corresponding to CQI and the like from the PUCCH and by determining whether reception quality or reception level of the part exceeds a predetermined value. The reception quality or the reception level may be represented by any proper amount that is known in this technical field, such as reception power, electric field strength RSSI, desired wave received power RSCP, ratio of desired wave power to undesired wave power SIR, SINR, Ec/No and the like. The determination result of the degree of reliability is reported to the PUSCH demodulation unit 14 and the scheduling unit 15.

The PUSCH demodulation unit 14 demodulates and decodes the PUSCH received from the user apparatus. If the reception timing of the predetermined information is the same as the reception timing of the PUSCH (if the same subframe is used), there is a possibility that the PUSCH includes the predetermined information. The PUSCH demodulation unit 14 receives the degree of reliability from the reliability determination unit 13. If the degree of reliability is low, the PUSCH demodulation unit 14 decodes the PUSCH by assuming that the PUSCH does not include the CQI and the like. On the other hand, if the degree of reliability is high, the PUSCH demodulation unit 14 decodes the PUSCH by assuming that the PUSCH includes the CQI and the like.

The scheduling unit 15 performs processes (scheduling) for assigning the shared data channel in the downlink and/or the uplink to a user. In the cases of the second operation example and the third operation example, the scheduling unit 15 determines whether to impose a restriction on the scheduling according to the value of the degree of reliability obtained from the reliability determination unit 13. The restriction is that the periodic reception timing of the CQI and the like should not agree with the reception timing of the PUSCH. The PUSCH of the case of the third operation example is a signal representing the message 3. Control information (UL-Grant, DL-Grant and the like) indicating the content of the scheduling is reported to the control channel generation unit 16.

The control channel generation unit 16 generates a control channel that includes at least the control information from the scheduling unit 16.

The downlink signal transmission unit 17 generates a signal to be transmitted on the downlink.

In the above, the present invention has been explained while referring to the specific embodiments. However, these are merely exemplary. Those skilled in the art will conceive of various modified examples, corrected examples, alternative examples, substituted examples, and the like. The present invention may be applied to any suitable mobile communication system in which the CQI and the like is periodically reported to the base station. For example, the present invention may be applied to W-CDMA systems of the HSDPA/HSUPA scheme, systems of the LTE scheme, IMT-Advanced systems, WiMAX, Wi-Fi scheme systems and the like. While specific numerical value examples are used to facilitate understanding of the present invention, such numerical values are merely examples. Thus, any appropriate value may be used unless specified otherwise. Classification into each embodiment or item in the description is not essential in the present invention, and features described in two or more items may be combined and used as necessary. Subject matter described in an item may be applied to subject matter described in another item (provided that they do not contradict). For convenience of explanation, the apparatus according to the embodiment of the present invention has been explained by using a functional block diagram. However, the apparatus may be implemented in hardware, software, or a combination thereof. The present invention is not limited to the above embodiment, so that various modified examples, corrected examples, alternative examples, substituted examples, and the like are included in the present invention without departing from the spirit of the present invention.

The present international application claims priority based on Japanese patent application No. 2010-031622, filed in the JPO on February 16, 2010, and the entire contents of the Japanese patent application No. 2010-031622 are incorporated herein by reference.

### LIST OF REFERENCE SYMBOLS

- 11: uplink signal receiving unit
- 12: PUCCH demodulation unit
- 13: reliability determination unit
- 14: PUSCH demodulation unit
- 15: scheduling unit
- 16: control channel generation unit
- 17: downlink signal transmission unit

## Claims

1. A base station apparatus in a mobile communication system, comprising:
a control signal decoding unit configured to decode an uplink control signal;
a data signal decoding unit configured to decode an uplink shared data signal; and
a reliability determination unit configured to determine a degree of reliability that predetermined information is included in the uplink control signal that is received periodically,
wherein, in the case where timing of a predetermined period of the predetermined information agrees with reception timing of the uplink shared data signal,
if the predetermined period is equal to or less than a radio frame length, the data signal decoding unit decodes the uplink shared data signal by assuming that the uplink shared data signal includes the predetermined information, and
if the predetermined period is longer than the radio frame length,
if the degree of reliability is lower than a predetermined value, the data signal decoding unit decodes the uplink shared data signal by assuming that the uplink shared data signal does not include the predetermined information, and
if the degree of reliability is higher than the predetermined value, the data signal decoding unit decodes the uplink shared data signal by assuming that the uplink shared data signal includes the predetermined information.

2. The base station apparatus as claimed in claim 1, further comprising:
a scheduling unit configured to perform scheduling on a signal for communicating with a user apparatus.

3. The base station apparatus as claimed in claim 2, wherein, if the degree of reliability is lower than the predetermined value, the scheduling unit performs the scheduling by imposing a restriction that timing of the predetermined period of the predetermined information should not agree with reception timing of the uplink shared data signal.

4. The base station apparatus as claimed in claim 3, wherein, if the degree of reliability is higher than the predetermined value, the scheduling unit performs the scheduling by releasing the restriction.

5. The base station apparatus as claimed in claim 2, further comprising:
a transmission unit configured to transmit a random access channel (RACH) response message in response to reception of a random access channel (RACH) preamble message from the user apparatus,
wherein the scheduling unit establishes transmission timing of the RACH response message such that the timing of the predetermined period for the predetermined information does not agree with reception timing of a handover complete signal sent from the user apparatus in response to the RACH response message.

6. The base station apparatus as claimed in claim 1, wherein, if the uplink shared data signal is a handover complete signal and the predetermined period is longer than the radio frame length, the data signal decoding unit decodes the uplink shared data signal by assuming that the uplink shared data signal does not include the predetermined information.

7. The base station apparatus as claimed in claim 1, wherein the reliability determination unit determines the degree of reliability by measuring reception quality of the predetermined information.

8. The base station apparatus as claimed in claim 1, wherein the predetermined information represents an indicator representing a downlink channel state, a rank indicator of a user apparatus, a precoding matrix indicator or a sounding reference signal.

9. A method in a base station apparatus of a mobile communication system, comprising the steps of:
receiving an uplink control signal periodically, decoding the uplink control signal, and determining a degree of reliability that predetermined information is included in the uplink control signal; and
receiving an uplink shared data signal and decoding the uplink shared data signal,
wherein, in the case where timing of a predetermined period for the predetermined information agrees with reception timing of the uplink shared data signal,
if the predetermined period is equal to or less than a radio frame length, the base station apparatus decodes the uplink shared data signal by assuming that the uplink shared data signal includes the predetermined information, and
if the predetermined period is longer than the radio frame length,
if the degree of reliability is lower than a predetermined value, the base station apparatus decodes the uplink shared data signal by assuming that the uplink shared data signal does not include the predetermined information, and
if the degree of reliability is higher than the predetermined value, the base station apparatus decodes the uplink shared data signal by assuming that the uplink shared data signal includes the predetermined information.

10. The method as claimed in claim 9, further comprising the step of:
performing scheduling on a signal for communicating with a user apparatus.

11. The method as claimed in claim 10, wherein, if the degree of reliability is lower than the predetermined value, the base station apparatus performs the scheduling by imposing a restriction that timing of the predetermined period for the predetermined information should not agree with reception timing of the uplink shared data signal.

12. The method as claimed in claim 11, wherein, if the degree of reliability is higher than the predetermined value, the base station apparatus performs the scheduling by releasing the restriction.

13. The method as claimed in claim 10, further comprising the step of:
transmitting a random access channel (RACH) response message in response to reception of a random access channel (RACH) preamble message from the user apparatus,
wherein the base station apparatus establishes transmission timing of the RACH response message such that the timing of the predetermined period of the predetermined information does not agree with reception timing of a handover complete signal sent from the user apparatus in response to the RACH response message.

14. The method as claimed in claim 9, wherein, if the predetermined period is longer than the radio frame length, even when the uplink shared data signal is a handover complete signal, the base station apparatus decodes the uplink shared data signal by assuming that the uplink shared data signal does not include the predetermined information.

15. The method as claimed in claim 9, wherein the degree of reliability is determined by measuring reception quality of the predetermined information.

16. The method as claimed in claim 9, wherein the predetermined information represents an indicator representing a downlink channel state, a rank indicator of a user apparatus or a sounding reference signal.
